# EUROPÄISCHE PATENTSCHRIFT

(11) **EP 2 820 696 B1**
(45) Veröffentlichungstag und Bekanntmachung des Hinweises auf die Patenterteilung: **13.01.2016**
(21) Anmeldenummer: 13702913.8
(22) Anmeldetag: 31.01.2013
(51) Int. Cl.: H01M 2/20, H01M 2/10

(54) **BATTERIE MIT WENIGSTENS ZWEI BATTERIEZELLEN UND MIT WENIGSTENS EINEM VERBINDUNGSELEMENT**
BATTERY COMPRISING AT LEAST TWO BATTERY CELLS AND AT LEAST ONE CONNECTING ELEMENT
BATTERIE COMPRENANT AU MOINS DEUX ÉLÉMENTS ET COMPRENANT AU MOINS UN ÉLÉMENT DE LIAISON

(30) Priorität: 28.02.2012 DE 102012003979
(43) Veröffentlichungstag der Anmeldung: 07.01.2015
(73) Patentinhaber: Audi AG, 85045 Ingolstadt (DE)
(72) Erfinder: PAULESER, Thomas, 86529 Schrobenhausen (DE); SCHMIDT, Jörg, 85057 Ingolstadt (DE); BÜTTNER, Karsten, 85051 Ingolstadt (DE); TRACK, Andreas, 74343 Sachsenheim (DE)
(74) Vertreter: Herbst, Matthias Heinz
(86) Internationale Anmeldenummer: PCT/EP2013/000286
(87) Internationale Veröffentlichungsnummer: WO 2013/127485

(56) Entgegenhaltungen:
- DE-A1-102010 013 024
- JP-A- H09 106 800
- US-A1- 2006 094 289

## Beschreibung

Die Erfindung betrifft eine Batterie mit wenigstens zwei Batteriezellen und mit wenigstens einem Verbindungselement, welches einen elektrischen Pol einer ersten Batteriezelle der Batterie mit einem elektrischen Pol wenigstens einer weiteren Batteriezelle der Batterie elektrisch verbindet. Das Verbindungselement weist in einem Grundkörper Ausnehmungen auf, in welchen eine stiftförmige Komponente des jeweiligen Pols der Batteriezelle aufgenommen ist.

In Traktionsbatterien für Elektrofahrzeuge und Hybridfahrzeuge werden Batteriezellen üblicherweise parallel und in Reihe geschaltet, um eine entsprechend hohe Leistung und Gesamtspannung der Batterie zu erzielen. Für die Verschaltung der Batteriezellen werden hierbei oft flache Profilteile aus Aluminium oder Kupfer verwendet, welche mit den Polen der Batteriezellen verschraubt oder verschweißt werden. Solche Profilteile werden auch als Stromschienen bezeichnet.

Die DE 10 2010 033 437 A1 beschreibt eine Akkumulatoranordnung mit zwei Akkumulatorzellen, welche jeweilige elektrische Pole aufweisen. Die beiden Pole sind durch ein Verbindungselement in Form eines Blechstreifens elektrisch miteinander verbunden. Hierfür ist eine Schraube mit einem Gewindestift in eine am elektrischen Pol vorgesehene Durchgangsöffnung mit einem Innengewinde eingeschraubt, wobei der Gewindestift durch eine in dem Verbindungselement vorgesehene Durchgangsöffnung hindurchgeführt ist. An einer dem Pol zugewandten Unterseite des Verbindungselements weist dieses eine strukturierte Kontaktfläche auf. Je nach Ausgestaltung der Materialhärten kann diese strukturierte Oberfläche die gegenüberliegende Kontaktfläche des Pols plastisch verformen, etwa durch Einprägung.

Die DE 10 2007 063 177 A1 beschreibt einen flachen Zellverbinder zum Verbinden zweier elektrischer Pole von Batteriezellen einer Batterie für ein Kraftfahrzeug. Der Zellverbinder weist zwei Öffnungen auf, in welche als Ausgleichselement jeweils ein Ring eingesetzt ist. Dieser hülsenförmige Ring wird sowohl mit dem Zellverbinder als auch mit dem bolzenförmigen Pol der Batteriezelle verschweißt. Das hülsenförmige Ausgleichselement ermöglicht hierbei einem Toleranzausgleich betreffend die Lage der Pole.

Ein in der DE 20 2009 012 647 U1 beschriebener Batteriezellenverbinder wird ebenfalls mit den elektrischen Polen von Batteriezellen verschweißt. Auch hier weist der Batteriezellenverbinder Durchtrittsöffnungen auf, in welche bolzenförmige Endabschnitte der elektrischen Pole von Batteriezellen eingeführt werden. An einer dem elektrischen Pol zugewandten Seite des Batteriezellenverbinders ist ein Flachstück angeschweißt. Hierbei ist das Flachstück aus einem elektrisch leitenden Material gebildet, welches von dem Material des Batteriezellenverbinders in dem Bereich verschieden ist, in welchem der Batteriezellenverbinder an einen weiteren elektrischen Pol einer weiteren Batteriezelle angeschlossen ist. So kann ein sortenreiner Übergang zwischen dem Zellverbinder und dem jeweiligen elektrischen Pol erreicht werden.

Die DE 10 2010 064 315 A1 beschreibt eine elektrische Verbindung zwischen den elektrischen Polen zweier Lithium-Ionen-Batteriezellen mittels einer Stromschiene, welche mit den jeweiligen Polen verschraubt ist. Hierbei ist zwischen Befestigungsmuttern und der Stromschiene ein kontaktverbesserndes Mittel angeordnet, welches der Verringerung des Übergangswiderstandes dient.

Das Vorsehen einer derartigen Vorkehrung zum Verringern des Übergangswiderstands ist jedoch vergleichsweise aufwändig.

Aufgabe der vorliegenden Erfindung ist es daher, eine Batterie mit einem Verbindungselement zu schaffen, welche auf besonders einfache Weise zu einem verringerten Übergangswiderstand führt.

Diese Aufgabe wird durch eine Batterie mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Die erfindungsgemäße Batterie umfasst wenigstens zwei Batteriezellen und das wenigstens eine Verbindungselement. Das Verbindungselement weist im Bereich der Ausnehmungen einen jeweiligen, über den Grundkörper hervortretenden Vorsprung auf, welcher mit dem Grundkörper des Verbindungselements stoffschlüssig verbunden ist. In Folge des Verbindens des Verbindungselements mit dem jeweiligen elektrischen Pol der Batteriezelle ist der Vorsprung zumindest bereichsweise in einen Sockelbereich des elektrischen Pols eingedrückt. Dies ist die Folge der großen Flächenpressung aufgrund der im Vergleich zum Grundkörper geringen Fläche des Vorsprungs.

Der Vorsprung dringt also unter Verdrängung von Material des Sockelbereichs in den Sockelbereich ein, wenn das Verbindungselement mit den Batteriezellen verspannt wird. Aufgrund der im Vergleich zum Grundkörper kleinen Fläche des Vorsprungs wird nämlich beim Verspannen des Verbindungselements mit den Batteriezellen eine hohe Flächenpressung erreicht. Diese und das Eindringen des Vorsprungs in den Sockelbereich des elektrischen Pols sorgen für einen sehr geringen Übergangswiderstand zwischen dem Verbindungselement und dem elektrischen Pol.

Dem liegt die Erkenntnis zugrunde, dass keine definierte und zudem eine vergleichsweise große Anlagefläche ausgebildet wird, wenn anstelle des Vorsprungs der Grundkörper des Verbindungselements mit dem Sockelbereich der Batteriezelle in Anlage gebracht wird. Die große Anlagefläche des Grundkörpers führt nämlich zu einer vergleichsweise geringen Flächenpressung. Wenn in einem solchen Fall die Verbindung durch Verschrauben des Verbindungselements mit den Batteriezellen herbeigeführt wird, so kann dies - insbesondere nach einem Setzen der Schraubverbindung - zu einem schlechten Übergangswiderstand im Bereich der Pole führen. Dies wird vorliegend durch das Vorsehen des mit dem Grundkörper stoffschlüssig verbundenen Vorsprungs im Bereich der Anbindung an die elektrischen Pole vermieden.

Aufgrund der stoffschlüssigen Verbindung des Vorsprungs mit dem Grundkörper des Verbindungselements ist vorliegend auch an dieser Stelle ein besonders geringer Übergangswiderstand gegeben. Durch die sehr geringen und somit verbesserten Übergangswiderstände im Bereich der Pole der Batteriezellen lässt sich auch ein verbessertes Alterungsverhalten der Verbindung erreichen.

Bei der Erfindung ist der Vorsprung als Buchse ausgebildet, welche die stiftförmige Komponente des Pols der Batteriezelle außenumfangsseitig umschließt. Eine solche ringförmige Buchse lässt sich besonders gut in den Sockelbereich des elektrischen Pols eindrücken, wenn das Verbindungselement mit den Batteriezellen verspannt wird. Zudem ist durch die als Kontaktring ausgebildete Buchse eine besonders gut definierte, kleine Anlagefläche bereitgestellt.

Zum besonders sicheren Anbinden des Vorsprungs an den Grundkörper des Verbindungselements hat sich ein Schweißverfahren als vorteilhaft herausgestellt, wobei insbesondere Reibschweißen zum Einsatz kommen kann.

Wenn gemäß einer weiteren vorteilhaften Ausgestaltung der Erfindung die Ausnehmungen in dem Grundkörper als Durchtrittsöffnungen ausgebildet sind, so lässt sich das Verbindungselement besonders einfach und prozesssicher montieren.

Als weiter vorteilhaft hat es sich gezeigt, wenn zumindest der Vorsprung mit einer Schutz vor Oxidation bereitstellenden Schutzschicht versehen ist, welche durch das Verbinden des Verbindungselements mit den Polen der Batteriezelle plastisch verformt ist. Eine solche Schutzschicht verhindert bereits vor dem Koppeln des Verbindungselements mit den Polen der Batteriezellen eine unerwünschte Oxidbildung im Bereich des Vorsprungs. Durch das Eindrücken des Vorsprungs in den Sockelbereich des elektrischen Pols wird die Schutzschicht von dem Vorsprung verdrängt und nicht oxidierte Kontaktflächen desselben werden freigelegt.

Zusätzlich oder alternativ kann die Schutzschicht in einem an die Ausnehmung angrenzenden Bereich des Grundkörpers vorgesehen sein, um auch im Bereich der Ausnehmungen einen Schutz vor Oxidation bereitzustellen.

Hierbei hat es sich als vorteilhaft gezeigt, wenn eine Menge des die Schutzschicht bildenden Materials derart bemessen ist, dass der Vorsprung außenumfangsseitig umschlossen wird, wenn beim Verbinden des Verbindungselements mit den Polen Material der Schutzschicht verdrängt wird. So sorgt die plastisch verformte Schutzschicht für ein außenumfangsseitiges Abdichten der Verbindung. Die plastisch verformte Schutzschicht bildet nämlich eine Hülle, welche die Verbindungsstelle besonders gut vor Umgebungseinflüssen abschirmt.

Zinn hat sich als besonders gut geeignetes Material für die Schutzschicht herausgestellt, da dieses Material einen guten Schutz vor Oxidation bietet und besonders leicht beim Verspannen des Verbindungselements mit den Polen plastisch verformbar ist.

Zusätzlich kann auch der jeweilige elektrische Pol der Batteriezelle mit einer, bevorzugt aus Zinn gebildeten, Schutzschicht versehen sein, welche beim Anbringen des Verbindungselements an die Batteriezellen vom Pol verdrängt wird und so nicht-oxidierte Kontaktflächen des Pols freilegt.

Das Verbindungselement kann des Weiteren zum Verbinden von Anschlüssen wenigstens zweier Batteriemodule ausgebildet sein, welche jeweils eine Mehrzahl von Batteriezellen umfassen. Hierbei ist dann der Vorsprung in einen Sockelbereich des jeweiligen Anschlusses eingedrückt. Es können auch mehr als zwei solcher Batteriemodule oder Batteriepakete mittels des Verbindungselements zu einem größeren System verschaltet werden. Auch hier sorgt die gute Verbindung des Verbindungselements mit den Anschlüssen für besonders geringe Übergangswiderstände und ein verbessertes Alterungsverhalten der Verbindung der Batteriemodule untereinander.

Bevorzugt ist zum Verspannen des Verbindungselements mit dem jeweiligen Pol der Batteriezelle zumindest eine jeweilige Schraubenmutter vorgesehen. Diese Schraubenmutter ist auf einen Gewindebolzen oder Gewindestift aufgeschraubt, welcher im Bereich des jeweiligen Sockels des elektrischen Pols vorgesehen ist. Durch das Verschrauben kann eine besonders hohe Flächenpressung aufgebracht werden, und die Verbindung ist wieder lösbar, etwa wenn eine Batteriezelle ausgetauscht werden soll.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: schematisch und ausschnittsweise eine gemäß dem Stand der Technik ausgebildete Batterie für ein Elektrofahrzeug, bei welcher eine Stromschiene mit den elektrischen Polen der Batteriezellen der Batterie verschraubt ist;
- Fig. 2: ausschnittsweise eine Batterie mit einer Mehrzahl von Batteriezellen, bei welcher in einen Grundkörper einer Stromschiene Kontaktringe eingeschweißt sind, welche beim Verschrauben der Stromschiene mit den Polen der Batteriezellen in einen Sockel der Pole eindringen; und
- Fig. 3: eine Detailansicht auf die Stromschiene gemäß Fig. 2 von unten, aus welcher eine mögliche Ausbildung des Kontaktring ersichtlich ist.

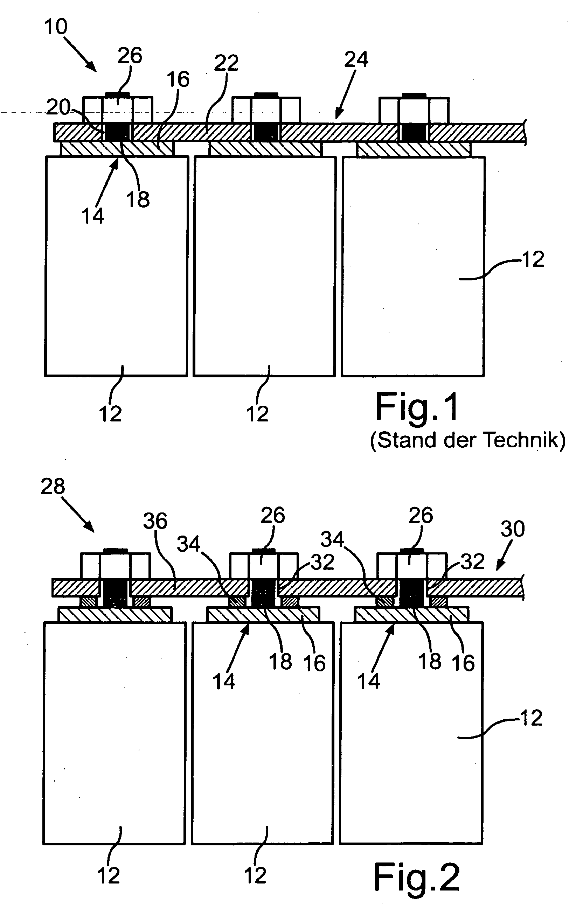

Eine in Fig. 1 schematisch gezeigte Batterie 10 gemäß dem Stand der Technik ist als Traktionsbatterie für ein Fahrzeug ausgebildet. Die Batterie 10 umfasst eine Mehrzahl von Batteriezellen 12 in Form von Lithium-Ionen-Zellen.

Elektrische Pole 14 der Batteriezellen 12 umfassen einen Sockel 16 und einen aus diesem Sockel 16 hervortretenden Gewindestift oder Gewindebolzen 18. Der Gewindebolzen 18 ist durch eine Ausnehmung 20 hindurchgeführt, welche in einem Grundkörper 22 einer Stromschiene 24 ausgebildet ist. Mittels einer auf den Gewindebolzen 18 aufgeschraubten Schraubenmutter 26 wird die Stromschiene 24 mit dem Sockel 16 der jeweiligen Batteriezelle 12 verspannt. Durch die Stromschiene 24 sind somit mehrere Batteriezellen 12 elektrisch parallel oder in Reihe geschaltet, je nach der Polarität ihrer elektrischen Pole 14.

Bei der Batterie 10 gemäß dem Stand der Technik, welche in Fig. 1 gezeigt ist, liegt im Bereich der Anlagefläche der Stromschiene 24 an den Sockel 16 des jeweiligen elektrischen Pols 14 eine vergleichsweise große und undefinierte Kontaktfläche vor. Dies geht mit einer geringen Flächenpressung einher, die nach einem Setzen der Schraubverbindung zu einem schlechten Übergangswiderstand führen kann.

Bei der in Fig. 2 gezeigten Batterie 28 ist daher zum Verbinden der elektrischen Pole 14 der einzelnen Batteriezellen 12 eine Stromschiene 30 vorgesehen, bei welcher im Bereich von Ausnehmungen 32, durch welche die Gewindebolzen 18 der elektrischen Pole 14 hindurchtreten, Kontaktringe 34 vorgesehen sind. Die Batterie 28 kann eine Traktionsbatterie für ein Elektrofahrzeug oder ein Hybridfahrzeug sein, wobei die Batteriezellen 12 insbesondere als Lithium-Ionen-Zellen ausgebildet sein können.

Die mit den Ausnehmungen 32 fluchtenden Kontaktringe 34 sind mit einem Grundkörper 36 der Stromschiene 30 durch Schweißen, beispielsweise durch Reibschweißen, verbunden. Die Kontaktringe 34, welche die Gewindebolzen 18 außenumfangsseitig umgeben, stellen im Bereich des jeweiligen Sockels 16 eines elektrischen Pols 14 der Batteriezellen 12 eine vergleichsweise geringe und definierte Kontaktfläche bereit.

Wird zum Verbinden der Stromschiene 30 mit den elektrischen Polen 14 der Batteriezellen 12 der Batterie 28 die jeweilige Schraubenmutter 26, welche auf den Gewindebolzen 18 aufgeschraubt ist, angezogen, so ergibt sich eine besonders hohe Flächenpressung im Bereich der Kontaktringe 34. Dies führt dazu, dass die Kontaktringe 34 ein Stück weit in den Sockel 16 des elektrischen Pols 14 eindringen. Dadurch wird ein besonders geringer Übergangswiderstand im Bereich der Verbindung der Stromschiene 30 mit den elektrischen Polen 14 der Batteriezellen 12 erreicht.

Sowohl die elektrischen Pole 14 als auch der mit dem Grundkörper 36 der Stromschiene 30 verschweißte Kontaktring 34 sind bevorzugt mit einer Schutzschicht aus Zinn versehen. Wenn der Kontaktring 34 durch das Anziehen der Schraubenmutter 26 in den Sockel 16 des jeweiligen elektrischen Pols 14 eingedrückt wird, wird diese aus Zinn gebildete Schutzschicht verdrängt. Dadurch werden zuvor durch das Zinn geschützte und somit nicht oxidierte Kontaktflächen des Kontaktrings 34 und des Sockels 16 freigelegt. Folglich gerät das nun nicht mehr mit Zinn bedeckte Material des Kontaktrings 34 in eine innige Anlage mit dem von dem Zinn verschiedenen Material des Sockels 16. Zudem lagert sich das verdrängte Zinn um den Kontaktring 34 herum ab, sodass eine außenumfangsseitig schützende Hülle für die Verbindung gebildet ist.

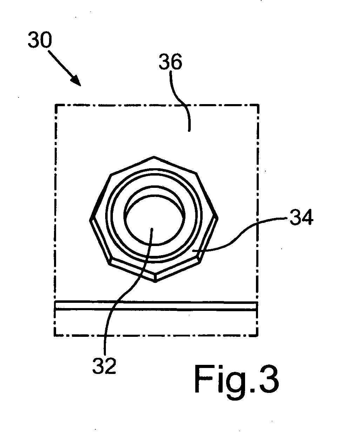

Fig. 3 zeigt die Stromschiene 30 gemäß Fig. 2 in einer Ansicht von unten, also einer Ansicht auf den Kontaktring 34. Dieser aus dem Grundkörper 36 der Stromschiene 30 wie ein Vorsprung hervorstehende Kontaktringe 34 ist vorliegend außenumfangsseitig polygonal. Es kann jedoch auch eine andere, beispielsweise runde Formgebung des Kontaktrings 34 vorgesehen sein.

Da der Kontaktring 34 erhaben über die Unterseite des Grundkörpers 36 der Stromschiene 30 hervortritt, kann er beim Verschrauben der Stromschiene 30 mit den elektrischen Polen 14 der Batteriezelle 12 besonders gut zumindest ein Stück weit in den Sockel 16 eindringen. Daraus resultiert eine besonders innige Verbindung der Stromschiene 30 mit den elektrischen Polen 14.

Mittels der Stromschiene 30 können auch Batteriemodule der Batterie 28, welche eine Mehrzahl von miteinander elektrisch verbundenen Batteriezellen 12 aufweisen, elektrisch verbunden werden. Hierfür kann ein jeweiliger Anschluss des Batteriemoduls entsprechend dem vorliegend für die Batteriezellen 12 schematisch gezeigten elektrischen Pol 14 ausgebildet sein. Der Kontaktring 34 oder ein derartiger über den Grundkörper 36 der Stromschiene 30 vortretender Vorsprung dringt dann entsprechend in einen am Anschluss bereitgestellten Sockel ein, wenn die Stromschiene 30 mit dem Anschluss verschraubt wird.

Die Stromschiene 30 kann insbesondere aus Aluminium oder Kupfer gebildet sein.

## Patentansprüche

1. Batterie mit wenigstens zwei Batteriezellen (12) und mit wenigstens einem Verbindungselement (30), welches zumindest einen elektrischen Pol (14) einer ersten Batteriezelle (12) mit einem elektrischen Pol (14) wenigstens einer weiteren Batteriezelle (12) einer Batterie (28) verbindet, wobei in Ausnehmungen (32), welche in einem Grundkörper (36) des Verbindungselements (30) vorgesehen sind, eine stiftförmige Komponente (18) des jeweiligen Pols (14) der Batteriezelle (12) aufgenommen ist,
**dadurch gekennzeichnet, dass**
der jeweilige elektrische Pol (14) der Batteriezelle (12) einen Sockelbereich (16) und die aus diesem Sockelbereich (16) hervortretende stiftförmige Komponente (18) umfasst, wobei das Verbindungselement (30) im Bereich der Ausnehmungen (32) einen jeweiligen, über den Grundkörper (36) hervortretenden Vorsprung (34) aufweist, welcher als die stiftförmige Komponente (18) des Pols (14) der Batteriezelle (12) umschließende Buchse (34) ausgebildet und mit dem Grundkörper (36) des Verbindungselements (30) stoffschlüssig verbunden ist, wobei der Vorsprung (34) infolge des Verspannens des Verbindungselements (30) mit dem jeweiligen elektrischen Pol (14) der Batteriezelle (12) zumindest bereichsweise in den Sockelbereich (16) des elektrischen Pols (14) eingedrückt ist.

2. Batterie nach Anspruch 1,
**dadurch gekennzeichnet, dass**
der Vorsprung (34) durch ein Schweißverfahren mit dem Grundkörper (36) des Verbindungselements (30) verbunden ist.

3. Batterie nach Anspruch 1 oder 2,
**dadurch gekennzeichnet, dass**
die Ausnehmungen als Durchtrittsöffnungen (32) ausgebildet sind.

4. Batterie nach einem der Ansprüche 1 bis 3,
**dadurch gekennzeichnet, dass**
zumindest der Vorsprung (34) und/oder ein an die Ausnehmung (32) angrenzender Bereich des Grundkörpers (36) mit einer Schutz vor Oxidation bereitstellenden Schutzschicht versehen ist, welche durch das Verbinden des Verbindungselements (30) mit den Polen (14) der Batteriezellen (12) plastisch verformt ist.

5. Batterie nach Anspruch 4,
**dadurch gekennzeichnet, dass**
ein Menge des die Schutzschicht bildenden Materials derart bemessen ist, dass durch beim Verbinden des Verbindungselements (30) mit den Polen (14) verdrängtes Material der Schutzschicht der Vorsprung (34) außenumfangsseitig umschlossen ist.

6. Batterie nach Anspruch 4 oder 5,
**dadurch gekennzeichnet, dass**
die Schutzschicht aus Zinn gebildet ist.

7. Batterie nach einem der Ansprüche 1 bis 6,
**dadurch gekennzeichnet, dass**
das Verbindungselement (30) zum Verbinden von Anschlüssen wenigstens zweier jeweils eine Mehrzahl von Batteriezellen (12) umfassenden Batteriemodule ausgebildet ist, wobei der Vorsprung (34) in einen Sockelbereich des jeweiligen Anschlusses eingedrückt ist.

8. Batterie nach einem der Ansprüche 1 bis 7,
**gekennzeichnet durch**
zumindest eine jeweilige Schraubenmutter (26), mittels welcher das Verbindungselement (30) mit dem jeweiligen Pol (14) der Batteriezelle (12) verspannt ist.

## Claims

1. Battery with at least two battery cells (12) and with at least a connecting element (30), which at least connects an electrical terminal (14) of a first battery cell (12) with an electric pole (14) of at least one other battery cell (12) of a battery (28), wherein recesses (32) are provided in the base body (36) of the connecting element (30) to receive a pin-shaped component (18) of the respective pole (14) of the battery cell (12), **characterised in that**
each electric pole (14) of the battery cell (12) has a base area (16) wherein a pin-shaped component (18) protrudes from the base area (16), and wherein the connecting element (30) in the region of the recesses (32) has a respective protrusion (34) protruding via the base body (36) which is formed as a sleeve (34) enclosing the pin-shaped component (18) of the pole (14) of the battery cell (12), and which is form-fit connected with the base body (36) of the connecting element (30), wherein the protrusion (34) is pressed at least partially into the base region (16) of the electric pole (14) as a result of the clamping of the connecting element (30) with the respective electric pole (14) of the battery cell (12).

2. Battery according to claim 1, **characterised in that** the protrusion (34) is connected with the base body (36) of the connecting element (30) by a welding process.

3. Battery according to claim 1 or 2, **characterised in that** the recesses are formed as through-openings (32).

4. Battery according to any one of the claims 1 to 3, **characterised in that** at least the protrusion (34) and/or the region of the base body (36) adjacent to the recess (32) is provided with a protective layer against oxidation, which is plastically deformed by the joining of the connecting member (30) with the poles (14) of the battery cells (12).

5. Battery according to claim 4, **characterised in that** the quantity of the material forming the protective layer is so dimensioned that the protrusion (34) is enclosed on the outer circumferential side by the material of the protective layer that is displaced upon connecting the connecting element (30) with the poles (14).

6. Battery according to claim 4 or 5, **characterised in that** the protective layer is made of tin.

7. Battery according to one of the claims 1 to 6, **characterised in that** the connecting element (30) is formed to connect the terminals of at least two battery modules each comprising a plurality of battery cells (12), wherein the protrusion (34) is pressed into a base region of the respective connection.

8. Battery according to one of the claims 1 to 7, **characterised in that** at least one respective screw nut (26) is used to tighten the connecting element (30) to the respective pole (14) of the battery cell (12).

## Revendications

1. Batterie comportant au moins deux éléments de batterie (12) et au moins un élément de connexion (30), qui connecte au moins un pôle électrique (14) d'un premier élément de batterie (12) à un
- pôle électrique (14) au moins d'un autre élément de batterie (12) d'une batterie (28), dans lequel un composant (18) en forme de tige du pôle respectif (14) de l'élément de batterie (12) est reçu dans des cavités (32) qui sont ménagées dans un corps de base (36) de l'élément de connexion (30),
**caractérisée en ce que** :
le pôle électrique respectif (14) de l'élément de batterie (12) comprend une zone de culot (16) et le composant en forme de tige (18) qui ressort de cette zone de culot (16), dans lequel l'élément de connexion (30) présente dans la zone des cavités (32) une saillie respective (34) dépassant du corps de base (36), laquelle saillie se présente sous la forme de la douille (34) enserrant le composant en forme de tige (18) du pôle (14) de l'élément de batterie (12) et est connectée au corps de base (36) de l'élément de connexion (30) solidement, dans lequel la saillie (34), à la suite du serrage de l'élément de connexion (30) sur le pôle électrique respectif (14) de l'élément de batterie (12), est enfoncée au moins par zones dans la zone de culot (16) du pôle électrique (14) .

2. Batterie selon la revendication 1,
**caractérisée en ce que** :
la saillie (34) est connectée au corps de base (36) de l'élément de connexion (30) par un procédé de soudage.

3. Batterie selon la revendication 1 ou la revendication 2,
**caractérisée en ce que** :
les cavités se présentent sous la forme d'ouvertures de passage (32).

4. Batterie selon l'une quelconque des
revendications 1 à 3,
**caractérisée en ce que** :
au moins la saillie (34) et/ou une zone du corps de base (36) adjacente à la cavité (32) et ou sont pourvues d'une couche de protection assurant une protection contre l'oxydation, laquelle couche est déformée de manière plastique par la connexion de l'élément de connexion (30) avec les pôles (14) des éléments de batterie (12).

5. Batterie selon la revendication 4,
**caractérisée en ce que** :
une quantité du matériau formant la couche de protection est mesurée de sorte que la saillie (34) soit entourée côté périphérique externe par le matériau de la couche de protection chassé lors de la connexion de l'élément de connexion (30) avec les pôles (14).

6. Batterie selon la revendication 4 ou la revendication 5,
**caractérisée en ce que** :
la couche de protection est formée d'étain.

7. Batterie selon l'une quelconque des revendications 1 à 6,
**caractérisée en ce que** :
l'élément de connexion (30) pour la connexion des bornes se présente sous la forme d'au moins deux modules de batterie comprenant respectivement une pluralité d'éléments de batterie (12), dans laquelle la saillie (34) est enfoncée dans une zone de culot de la borne respective.

8. Batterie selon l'une quelconque des revendications 1 à 7,
**caractérisée par** :
au moins un écrou respectif (26) à l'aide duquel l'élément de connexion (30) est serré sur le pôle respectif (14) de l'élément de batterie (12).
